# EUROPEAN PATENT SPECIFICATION

(11) **EP 3 592 108 B1**
(45) Date of publication and mention of the grant of the patent: **05.05.2021**
(21) Application number: 19183876.2
(22) Date of filing: 02.07.2019
(51) Int. Cl.: H05B 3/28, H05B 3/14, B64C 1/18

(54) **FUSION WELDED POSITIVE TEMPERATURE COEFFICIENT HEATER ASSEMBLIES**
SCHMELZGESCHWEISSTE HEIZVORRICHTUNGEN MIT POSITIVEM TEMPERATURKOEFFIZIENTEN
BLOCS CHAUFFANTS SOUDÉS PAR FUSION À COEFFICIENT DE TEMPÉRATURE POSITIF

(30) Priority: 03.07.2018 US 201862693759 P
(43) Date of publication of application: 08.01.2020
(73) Proprietor: Goodrich Corporation, Charlotte, NC 28217-4578 (US)
(72) Inventor: ZHAO, Wenping, Glastonbury, CT 06033 (US); HU, Jin, Hudson, OH 44236 (US); CHING, Nathaniel, Hartville, OH 44632 (US); OWENS, George F., Akron, OH 44319 (US); SLANE, Casey, Tallmadge, OH 44278 (US); HEIN, Brandon, Stow, OH 44224 (US); WAINA, Daniel, Uniontown, OH 44685 (US); MULLEN, James A., Wadsworth, OH 44281 (US); PATTERSON, Melissa Leigh, North Canton, OH 44720 (US); BOTURA, Galdemir Cezar, Akron, OH 44313 (US)
(74) Representative: Dehns

(56) References cited:
- EP-A1- 1 638 371
- EP-A1- 3 015 360
- GB-A- 1 444 718
- US-A1- 2006 138 279

## Description

### BACKGROUND

This application relates generally to heated floor panel assemblies for aircraft, and specifically to positive temperature coefficient heater floor panel assemblies.

Heated floor panels are often used in aircraft to mitigate the effects of cold underfloor temperatures and to help maintain a comfortable cabin temperature. The floor panels are typically supported by an aircraft structure arranged, for example, in a grid-like pattern. The floor panels have structural integrity sufficient to support the weight of people and objects resting on the panels. An impact layer typically forms the top surface of the panel to protect the underlying layers (e.g. weight supporting layers and/or a heating layer) from punctures from high heels, chips from dropped objects, scratches from dragged luggage, and/or other floor-traffic related hazards.

Positive temperature coefficient (PTC) heaters are used in heated floor panel structures. PTC heaters are those that self-regulate and run on an open-loop without external control. Typically, to attach a PTC heater in a heated floor panel assembly, multiple layers of film adhesives are used to secure the floor panel together. Multiple sheet adhesives hinder the heating ability of PTC heaters, creating unwanted insulation, in addition to creating fire resistance challenges Heated floor panel assemblies according to the prior art are known from EP 3 015 360 A1, US 2006/138279 A1, EP 1 638 371 A1 or GB 1 444 718 A.

### SUMMARY

In a first embodiment, a floor panel assembly has a top surface and a bottom surface. The assembly includes an impact layer proximate the top surface, a core layer between the impact layer and the bottom surface, a positive temperature coefficient heater between the impact layer and the core layer, and at least one structural layer between the impact layer and the bottom surface. The heater includes a first dielectric layer, a positive temperature coefficient heater element on the first dielectric layer, and a second dielectric layer overlaying and welded to the positive temperature coefficient heater element.

In a second embodiment, a heater includes a first dielectric layer, a positive temperature coefficient heater element on the dielectric layer, a bus bar on the dielectric layer and overlapping the positive temperature coefficient heater element, and a second dielectric layer overlaying the positive temperature coefficient heater element and the bus bar, the second dielectric layer welded to the first dielectric layer.

In a third embodiment, a method of making a heating layer for a floor panel assembly includes printing a positive temperature coefficient heater element onto a first dielectric layer, printing a bus bar on the first dielectric layer such that the bus bar connects to the positive temperature coefficient heater element, placing a second dielectric layer onto the positive temperature coefficient heater element, wherein the second dielectric layer is a plastic film, and welding the second dielectric layer to the first dielectric layer.

In a fourth embodiment, a method of making a floor panel assembly includes aligning an impact layer, a thermoplastic dielectric layer, a welded positive temperature coefficient heating layer, one or more structural layers, and a core layer, and attaching the one or more structural layers, the core layer, and impact layer to the welded positive temperature coefficient heating layer. The welded positive temperature coefficient heating layer includes a first dielectric layer, a positive temperature coefficient heater element on the dielectric layer, a bus bar on the dielectric layer and overlapping the positive temperature coefficient heater element, and a second dielectric layer overlaying the positive temperature coefficient heater element and the bus bar, the second dielectric layer welded to the first dielectric layer.

### BRIEF DESCRIPTION OF THE DRAWINGS

FIGS. 1A-1B are a schematic drawings of a prior art PTC floor panel assembly.
FIGS. 2A-2B are a schematic drawings of a PTC floor panel assembly including a fusion welded PTC heater.
FIG. 3A is a schematic drawing of a PTC heating layer.
FIG. 3B is an exploded 3-D view of a PTC heating layer.

### DETAILED DESCRIPTION

A heated floor panel assembly includes a positive temperature coefficient (PTC) heater made of a PTC heater element sandwiched between two dielectric layers made of thermoplastic. The two dielectric layers are welded to each other, securing the PTC heater element to make the PTC heater in the floor panel assembly. The heated floor panel assembly further includes one or more structural layers and a core layer.

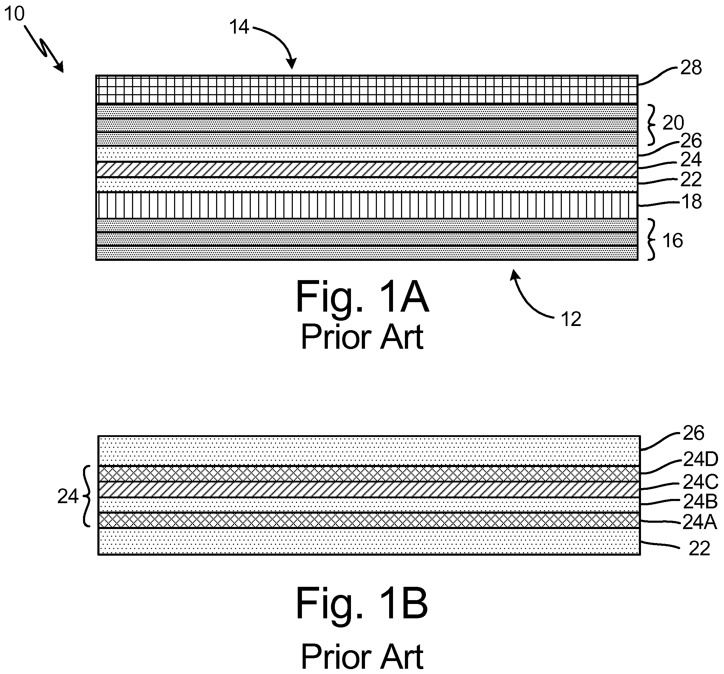

FIGS. 1A-1B are a schematic drawing of prior art PTC floor panel assembly 10, and will be discussed together. Prior art floor panel assembly 10 has bottom surface 12 and top surface 14. Assembly 10 includes first structural stack 16, core layer 18, second structural stack 20, first adhesive 22, PTC heating layer 24, second adhesive 26, and impact layer 28.

Stacks of structural layers 16 and 20 provide reinforcement to assembly 10. Stacks of structural layers 16 and 20 can be a reinforced polymer, such as a carbon fiber or glass fiber reinforced thermoplastic (polyether ether ketone, polycarbonate, polyphenylene sulfide, polyetherimide) or a carbon fiber or glass fiber impregnated with a thermoset resin (epoxy, phenolic, bismaleimide, benzoxazine). Each stack of structural layers 16 and 20 can include a single ply, or a stack of plies, depending on, for example, the material chosen to form the structural layers, or the particular need for reinforcement. Additional and/or alternative structural layers can also be added in other embodiments.

Core layer 18 provides stiffness to assembly 10, and carries shear loads to floor panel assembly 10. Core layer 18 can, in an exemplary embodiment, be formed from a metallic material, such as aluminum alloy, stainless steel, or titanium, and can further be arranged in a honeycomb structure. Alternatively, core layer 18 can be formed from a synthetic honeycomb, such as resin-infused aramids (e.g., Kevlar® or Nomex®), resin-infused carbon fiber or fiberglass, thermoplastic tubing, as well as an open-cell or close-cell polymer foam. Infusing resins could be epoxy, phenolic, or cyanate ester. Generally, a metallic core layer has greater thermal conductivity than a polymer core layer.

First adhesive layer 22 and second adhesive layer 26 are adhesives used to secure PTC heating layer 24 in place. Adhesive layers 22, 26, can be, for example, a pressure sensitive adhesive (PSA) or an ethylene vinyl acetate that secure PTC heating layer 24 when forces are applied. PTC heating layer 24 is bonded between second structural stack 20 and core layer 18 with adhesive layers 22, 26.

PTC heating layer 24 is shown in detail in FIG. 1B surrounded by adhesives 22, 26. PTC heating layer 24 includes first dielectric layer 24A, heater adhesive 24B, heater element 24C, and second dielectric layer 24D. Dielectric layers 24A, 24D, act as substrates on which heater element 24C sits. Dielectric layers 24A, 24D can alternatively be ceramic, polyimide, or polyamide substrates for PTC heater element 24C.

PTC heater element 24C is a resistive, self-regulating heater. PTC heaters are typically made of conductive inks printed on ceramic or polymer substrates. PTC heaters run open-loop without any external diagnostic controls. PTC heaters have high reliability and efficiency, and provide safe, fast, and uniform heating. The self-regulating nature of PTC heaters eliminates the risk of overheating. PTC heaters utilize Positive Temperature Coefficient materials that exhibit a positive resistance change in response to the increase in temperature. As the temperature increases to a threshold, the electrical resistance of the material increases significantly, thus limiting the current flow. Heater element 24C produces heat for assembly 10 through an electrical connection.

In Prior Art FIG. 1B, heater adhesive 24B secures heater element 24C to dielectric layers 24A, 24D. Heater adhesive 24B can be, for example, a pressure sensitive adhesive. Heater adhesive 24B adds mass and weight to PTC heating layer 24. Heater adhesive 24B additionally insulates PTC heating layer 24, preventing heat transfer to top surface 14.

Shown in FIG. 1A, impact layer 28 can be a monolithic material, such as a monolithic metal or a monolithic polymer, or a composite material. For instance, impact layer 28 can be a polymer reinforced fabric. In this case, impact layer 28 would include both a fiber and a polymer. The fiber of impact layer 28 can be made of fiberglass or carbon fiber materials, a thermoplastic fiber, or a metallic fiber. The polymer of impact layer 28 can be a thermoplastic or a thermoset, preferably a polymer with a high toughness. Impact layer 28 prevents damage to PTC heating layer 24 by blocking or dulling blunt force impact into assembly 10.

Assembly 10 has significant disadvantages caused by heater adhesive 24B embedded in PTC heating layer 24. While PTC heating layer 24 is an efficient source of heat, any thermal energy it produces is insulated and minimized by adhesive layer 24B. Additionally, many heater adhesives 24B that are chemically compatible with PTC heating layer 24C are not able to meet strength requirements. For this reason, a different PTC heater attachment scheme is desired in heated floor panel assemblies that require a high amount of thermal energy transfer to an aircraft cabin.

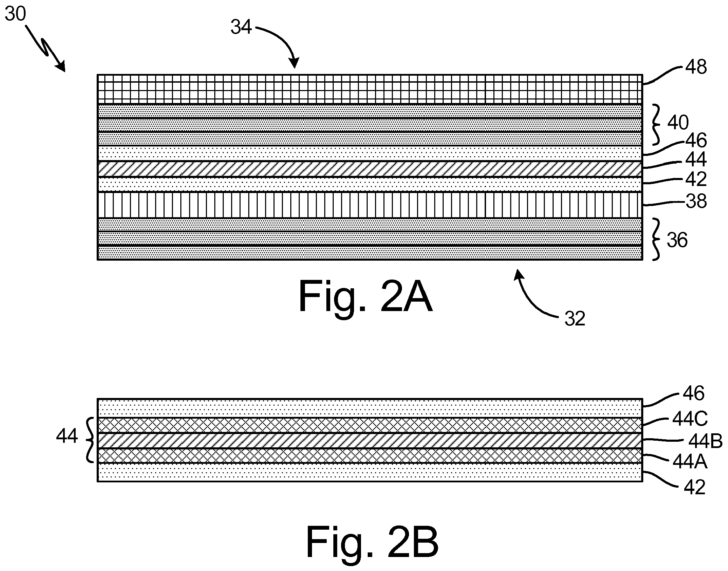

FIGS. 2A-2B are schematic drawings of PTC floor panel assembly 30 with fusion welded PTC heating layer 44, and will be discussed together. Instead of heater adhesive 24B from Prior Art, welded PTC heating layer 44 has welded joints through thin dielectric layers surrounding the heater element.

FIG. 2A shows PTC heating layer 44 within floor panel assembly 30. Floor panel assembly 30 has bottom surface 32 and top surface 34 and includes first structural stack 36, core layer 38, second structural stack 40, first adhesive 42, PTC heating layer 44, second adhesive 46, and impact layer 48.

Structural stacks 36, 40, core layer 38, adhesives 42, 46,and impact layer 48 are similar to those discussed with reference to FIG. 1, and can be made of the same or similar materials. Components 36, 40, 38, 42, 46, and 48 serve the same functions in assembly 30 as their counterparts do in prior art assembly 10.

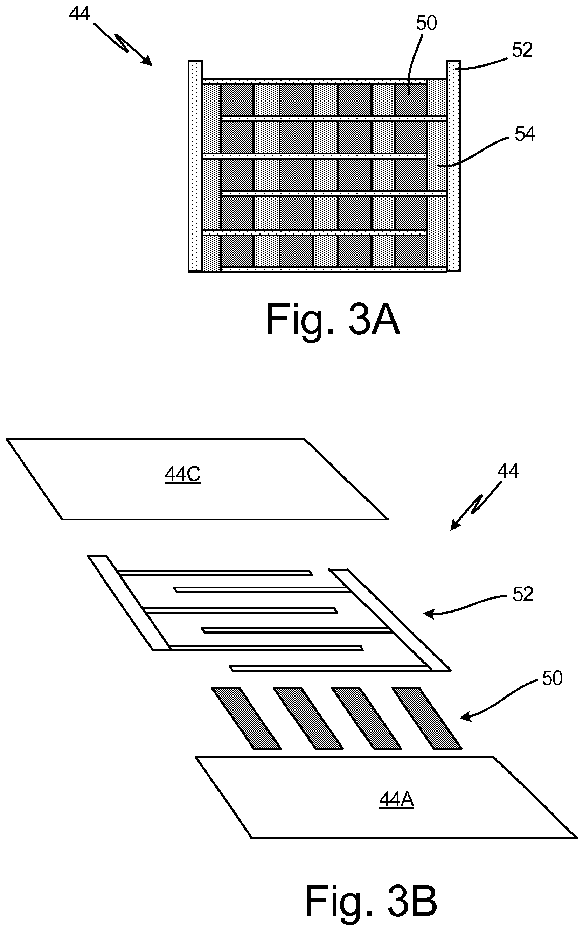

Shown in FIG. 2B, PTC heating layer 44 includes first dielectric layer 44A, PTC heater element 44B, and second dielectric layer 44C. PTC heating layer 44 (shown also in FIG. 3) is made on thin weldable first dielectric layer 44A made of a thermoplastic. This replaces traditional ceramic, polyimide, or polyamide PTC substrates. Second dielectric layer 44C is also made of a thin thermoplastic. PTC heater element 44B is printed directly on to first dielectric layer 44A.

Typically, a bus bar is also printed on the thermoplastic dielectric layer, overlapping with the PTC heater in some parts, but leaving portions of the thermoplastic dielectric layer open to be used as weld joints. In PTC heating layer 44, first dielectric layer 44A is welded to second dielectric layer 44A around PTC heater element 44B to secure PTC heating layer 44. This eliminates the need for a pressure sensitive adhesive, such as heater adhesive 24B in FIG. 1B.

In this way, welded dielectric layers 44A, 44C replace thick pressure sensitive heater adhesive 24B from prior art assembly 10. Instead of pressure sensitive or film adhesives that hinder the flow of heat through the assembly, thermoplastic dielectric layers 44A, 44C are thin, thermally conductive, and easily welded to PTC heating layer 44. Thermoplastic dielectric layers 44A, 44C are connected to PTC heating layer 44 through several welded or laminated joints. Thermoplastic dielectric layers 44A, 44B can be for example, thermoplastic polyimide, polyether ether ketone, polyetherimide, polyphenylene sulfide, polyethylene terephthalate, or polyphenylsulfone. Thermoplastic dielectric layers 44A, 44C should be both weldable and thermally conductive. With weldable dielectric layers 44A, 44C, PTC heating layer 44 is secure.

FIG. 3A is a schematic drawing of PTC heating layer 44 for use in a heated floor panel assembly without adhesive. FIG. 3B is a 3-D exploded view of PTC heating layer 44. FIGS. 3A and 3B will be discussed together. PTC heating layer 44 includes dielectric layers 44A, 44C, PTC heater 50, bus bar 52, and weldable portions 54.

As discussed with reference to FIGS. 2A-2B, first dielectric layer 44A serves as a substrate for PTC heater 50. First dielectric layer 44A is a thin thermoplastic dielectric layer in this embodiment with a thickness of 20 to 200 microns. First dielectric layer 44A can be, for example, thermoplastic polyimide, polyether ether ketone, polyetherimide, polyphenylene sulfide, polyethylene terephthalate, polyphenylsulfone, or fluorinated ethylene propylene. The substrate dielectric layer 48 may be another non-weldable material coated in a thermoplastic such as to make the layer weldable. A thermoplastic dielectric layer is both weldable (to create joints with second dielectric layer 44C) and thermally conductive (to transfer heat up through assembly 30 to top surface 34 inside an aircraft).

Together, PTC heater 50 and bus bar 52 make PTC heater element 44B of FIG. 2B. PTC heater 50 is a carbon-filled polymer ink printed on first dielectric layer 44A. Examples of appropriate PTC inks include DuPont ® 7292 or Loctite ® ECI 8001. PTC heater 50 on first dielectric layer 44A is printed in strips, leaving sufficient area of first dielectric layer 44A open. Bus bar 52 is a metal-filled ink such as silver ink or copper ink, also printed onto first dielectric layer 44A. Examples of appropriate bus bar inks include DuPont ® 5025 or Loctite ® ECI 1010. Here, bus bar 52 is printed in stripes perpendicular to PTC heater 50, overlaying some of PTC heater 50, but leaving portions 54 open for weld joints. PTC heater 50 and bus bar 52 can be printed in varying, overlapping patterns, provided weldable portions 54 are reserved.

Second dielectric layer 44C is overlaid on PTC heater 50 and bus bar 52, opposite first dielectric layer 44A. Second dielectric layer 44C is welded to first dielectric layer 44A through weldable portions 54 between PTC heater 50 and bus bar 52. The weld joints between first dielectric layer 44A and second dielectric layer 44C eliminate the need for additional adhesive in PTC heating layer 44.

During construction of a floor panel assembly, PTC heating layer 44 is prepared by first cleaning or treating the surface of first dielectric layer 44A on which PTC heater 50 will be printed. This prepares first dielectric layer 44A to receive PTC heater ink and bus bar ink. This can be a variety of chemical treatments depending on the materials used. Next, PTC heater 50 is printed onto first dielectric layer 44A. Here, PTC heater 50 is usually an ink with positive temperature coefficient properties. PTC heater 50 can, for example, be printed in stripes.

Next, bus bar 52 is printed on substrate dielectric layer 48, overlaying PTC heater 50. Bus bar 52 can, for example, be printed in stripes perpendicular to PTC heater 50. Bus bar 52 is usually a conductive ink with additives. Weldable portions 50 are left between PTC heater 50 and bus bar 52.

Finally, a second dielectric layer 44C with thickness 2 to 200 microns is placed on top surface of first dielectric layer 44A (with printed PTC 50 and bus bar 52). Second dielectric layer 44C is attached to weldable portions 54 of PTC heating layer 44. This can be accomplished through laser welding, heat sealing, ultrasonic welding, radio frequency welding, or other welding.

After assembly of PTC heating layer 44, floor panel assembly 30 can be fully assembled. PTC heating layer 44 can be attached to components 36, 38, 40, 48 through the use of adhesives such as adhesives 42, 46. Alternatively, the components 36, 38, 40, 42, 44, 46, 48 can be laminated together. The other components 36, 38, 40, can be attached by normal means such as resin pre-impregnated layers, lamination, or film adhesives.

A heated floor panel assembly with fusion welded PTC heater allows for more even and efficient transfer of heat to the top surface of the floor panel assembly, while maintaining a secure connection between the PTC heater and the assembly. The use of thermoplastic dielectric layer for this connection allows for flexibility in the assembly due to thermoplastic properties. This aid in avoiding damage and allowing easy repair. The welded thermoplastic dielectric layers could potentially be 10 to 300,000 times stronger than most pressure sensitive adhesives.

Finally, a heated floor panel assembly with welded PTC heater through thermoplastic dielectric layers meets stringent flame, smoke, and toxicity (FST) requirements. Thermoplastic dielectric layers have low smoke release, low toxicity, nd are non-flammable.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A floor panel assembly (30) having a top surface (34) and a bottom surface (32), the assembly comprising:
an impact layer (48) proximate the top surface (34);
a core layer (38) between the impact layer (48) and the bottom surface (32);
a positive temperature coefficient heater (44) between the impact layer and the core layer, the heater comprising:
a first dielectric layer (44A);
a positive temperature coefficient heater element (44B) on the first dielectric layer (44A); and
a bus bar (52) on the first dielectric layer (44A), wherein the bus bar overlaps the positive
temperature coefficient heater element;
a second dielectric layer (44C) overlaying the positive temperature coefficient heater element and the bus bar (52); and
at least one structural layer between the impact layer (48) and the bottom surface (32); **characterised in that** the second dielectric layer (44C) is welded to the first dielectric layer (44A).

2. The floor panel assembly of claim 1, wherein the first dielectric layer (44A) and the second dielectric layer (44C) are weldable plastic films that comprise a thermoplastic selected from the group consisting of thermoplastic polyimide, polyether ether ketone, polyetherimide, polyphenylene sulfide, polyethylene terephthalate, polyphenylsulfone, fluorinated ethylene propylene, and combinations thereof and have a thickness between 20 microns and 200 microns.

3. The floor panel assembly of claim 1 or 2, wherein the second dielectric layer (44C) is welded to the first dielectric layer (44A) through weld joints made from ultrasonic welding, laser welding, radio frequency welding, or heat sealing.

4. The floor panel assembly of any preceding claim, further comprising a second core layer between the impact layer and the positive temperature coefficient heater.

5. The floor panel assembly of any preceding claim, wherein the bus bar (52) comprises a metallic material selected from the group consisting of silver, copper, and combinations thereof.

6. The floor panel assembly of claim 5, wherein the bus bar (52) is a metallic ink selected from the group consisting of silver ink and copper ink.

7. The floor panel assembly of any preceding claim, wherein the at least one structural layer comprises a reinforced polymer matrix comprising a structural fiber matrix impregnated with a structural resin.

8. The floor panel assembly of any preceding claim, wherein the positive temperature coefficient heater element is an additive filled carbon ink.

9. A method of making a positive temperature coefficient heater for a floor panel assembly (30) comprising:
providing a first dielectric layer (44A);
printing a positive temperature coefficient heater element (44B) onto the first dielectric layer (44A);
printing a bus bar (52) onto the first dielectric layer (44A) such that the bus bar (52) overlaps the positive temperature coefficient heater element;
overlaying a second dielectric layer (44C) over the positive temperature coefficient heater element and bus bar (52) such that portions of the second dielectric heater are in contact with the first dielectric layer; and
welding the second dielectric layer (44C) to the first dielectric layer (44A).

10. The method of claim 9, wherein the first dielectric layer (44A) and the second dielectric layer (44C) are weldable plastic films that comprise a thermoplastic selected from the group consisting of thermoplastic polyimide, polyether ether ketone, polyetherimide, polyphenylene sulfide, polyethylene terephthalate, polyphenylsulfone, fluorinated ethylene propylene, and combinations thereof and have a thickness between 20 microns and 200 microns.

11. The method of claim 9 or 10, wherein the second dielectric layer (44C) is welded to the first dielectric layer (44A) through weld joints made from ultrasonic welding, laser welding, radio frequency welding, or heat sealing.

12. The method of claim 9, 10, or 11, wherein printing the positive temperature coefficient heater element comprises printing an additive filled carbon loaded ink.

13. The method of claim 9, 10, 11, or 12, wherein printing the bus bar (52) comprises printing silver ink or copper ink.

14. The method of claim 9, 10, 11, 12, or 13, wherein welding the second dielectric layer (44C) comprises ultrasonic welding, laser welding, radio frequency welding, or heat sealing.

## Patentansprüche

1. Bodenplattenanordnung (30), die eine obere Fläche (34) und eine untere Fläche (32) aufweist, wobei die Anordnung Folgendes umfasst:
eine Aufprallschicht (48), die sich in der Nähe der oberen Fläche (34) befindet;
eine Kernschicht (38), die sich zwischen der Aufprallschicht (48) und der unteren Fläche (32) befindet;
eine Heizung (44) mit positivem Temperaturkoeffizienten zwischen der Aufprallschicht und der Kernschicht, wobei die Heizung Folgendes umfasst:
eine erste dielektrische Schicht (44A);
ein Heizungselement (44B) mit positivem Temperaturkoeffizienten auf der ersten dielektrischen Schicht (44A); und
eine Sammelschiene (52) auf der ersten dielektrischen Schicht (44A), wobei die Sammelschiene das Heizungselement mit positivem Temperaturkoeffizienten überlagert;
wobei eine zweite dielektrische Schicht (44C) das Heizungselement mit positivem Temperaturkoeffizienten und die Sammelschiene (52) überlagert;
mindestens eine Strukturschicht zwischen der Aufprallschicht (48) und der unteren Fläche (32); **dadurch gekennzeichnet, dass** die zweite dielektrische Schicht (44C) an die erste dielektrische Schicht (44A) geschweißt ist.

2. Bodenplattenanordnung nach Anspruch 1, wobei die erste dielektrische Schicht (44A) und die zweite dielektrische Schicht (44C) schweißbare Kunststofffolien sind, die einen Thermoplast umfassen, ausgewählt aus der Gruppe bestehend aus einem thermoplastischen Polyimid, einem Polyetheretherketon, einem Polyetherimid, einem Polyphenylensulfid, einem Polyethylenterephthalat, einem Polyphenylsulfon, einem fluoriertem Ethylenpropylen und Verbindungen davon, und eine Dicke zwischen 20 Mikron und 200 Mikron aufweisen.

3. Bodenplattenanordnung nach Anspruch 1 oder 2, wobei die zweite dielektrische Schicht (44C) durch Schweißnähte an die erste dielektrische Schicht (44A) geschweißt ist, die durch Ultraschallschweißen, Laserschweißen, Hochfrequenzschweißen oder Heißsiegeln erzeugt sind.

4. Bodenplattenanordnung nach einem der vorstehenden Ansprüche, ferner umfassend eine zweite Kernschicht zwischen der Aufprallschicht und der Heizung mit positivem Temperaturkoeffizienten.

5. Bodenplattenanordnung nach einem der vorstehenden Ansprüche, wobei die Sammelschiene (52) ein metallisches Material umfasst, das ausgewählt ist aus der Gruppe bestehend aus Silber, Kupfer und Kombinationen davon.

6. Bodenplattenanordnung nach Anspruch 5, wobei die Sammelschiene (52) eine metallische Tinte ist, die ausgewählt ist aus der Gruppe bestehend aus Silbertinte und Kupfertinte.

7. Bodenplattenanordnung nach einem der vorstehenden Ansprüche, wobei die mindestens eine Strukturschicht eine verstärkte Polymermatrix umfasst, die eine Strukturfasermatrix umfasst, die mit einem Strukturharz imprägniert ist.

8. Bodenplattenanordnung nach einem der vorstehenden Ansprüche, wobei das Heizungselement mit positivem Temperaturkoeffizienten eine additiv aufgetragene Kohletinte ist.

9. Verfahren zum Herstellen einer Heizung mit positivem Temperaturkoeffizienten für eine Bodenplattenanordnung (30), umfassend:
Bereitstellen einer ersten dielektrischen Schicht (44A);
Drucken eines Heizungselements (44B) mit positivem Temperaturkoeffizienten auf die erste dielektrische Schicht (44A) ;
Drucken einer Sammelschiene (52) auf die erste dielektrische Schicht (44A), so dass die Sammelschiene (52) das Heizungselement mit positivem Temperaturkoeffizienten überlagert;
Überlagern einer zweiten dielektrischen Schicht (44C) über das Heizungselement mit positivem Temperaturkoeffizienten und die Sammelschiene (52), so dass Teile der zweiten dielektrischen Heizung die erste dielektrische Schicht berühren; und
Schweißen der zweiten dielektrischen Schicht (44C) auf die erste dielektrische Schicht (44A).

10. Verfahren nach Anspruch 9, wobei die erste dielektrische Schicht (44A) und die zweite dielektrische Schicht (44C) schweißbare Kunstofffolien sind, die einen Thermoplast umfassen, ausgewählt aus der Gruppe bestehend aus einem thermoplastischen Polyimid, einem Polyetheretherketon, einem Polyetherimid, einem Polyphenylensulfid, einem Polyethylenterephthalat, einem Polyphenylsulfon, einem fluoriertem Ethylenpropylen und Verbindungen davon, und eine Dicke zwischen 20 Mikron und 200 Mikron aufweisen.

11. Verfahren nach Anspruch 9 oder 10, wobei die zweite dielektrische Schicht (44C) durch Schweißnähte an die erste dielektrische Schicht (44A) geschweißt ist, die durch Ultraschallschweißen, Laserschweißen, Hochfrequenzschweißen oder Heißsiegeln erzeugt sind.

12. Verfahren nach Anspruch 9, 10 oder 11, wobei ein Drucken des Heizungselements mit positivem Temperaturkoeffizienten ein Drucken von additiv aufgetragener, mit Kohle versetzter Tinte umfasst.

13. Verfahren nach Anspruch 9, 10, 11 oder 12, wobei ein Drucken der Sammelschiene (52) ein Drucken von Silbertinte oder Kupfertinte umfasst.

14. Verfahren nach Anspruch 9, 10, 11, 12 oder 13, wobei ein Schweißen der zweiten dielektrischen Schicht (44C) Ultraschallschweißen, Laserschweißen, Hochfrequenzschweißen oder Heißsiegeln umfasst.

## Revendications

1. Ensemble de panneau de plancher (30) ayant une surface supérieure (34) et une surface inférieure (32), l'ensemble comprenant :
une couche d'impact (48) à proximité de la surface supérieure (34) ;
une couche centrale (38) entre la couche d'impact (48) et la surface inférieure (32) ;
un dispositif de chauffage à coefficient de température positif (44) entre la couche d'impact et la couche centrale, le dispositif de chauffage comprenant :
une première couche diélectrique (44A) ;
un élément de dispositif de chauffage à coefficient de température positif (44B) sur la première couche diélectrique (44A) ; et
une barre omnibus (52) sur la première couche diélectrique (44A), dans lequel la barre omnibus chevauche l'élément de dispositif de chauffage à coefficient de température positif ;
une seconde couche diélectrique (44C) recouvrant l'élément de dispositif de chauffage à coefficient de température positif et la barre omnibus (52) ; et
au moins une couche structurelle entre la couche d'impact (48) et la surface inférieure (32) ; **caractérisé en ce que** la seconde couche diélectrique (44C) est soudée à la première couche diélectrique (44A).

2. Ensemble de panneau de plancher selon la revendication 1, dans lequel la première couche diélectrique (44A) et la seconde couche diélectrique (44C) sont des films plastiques soudables qui comprennent un thermoplastique choisi dans le groupe constitué du polyimide thermoplastique, du polyéther éther cétone, du polyétherimide, du sulfure de polyphénylène, du polyéthylène téréphtalate, de la polyphénylsulfone, de l'éthylène propylène fluoré et de combinaisons de ceux-ci et qui ont une épaisseur comprise entre 20 microns et 200 microns.

3. Ensemble de panneau de plancher selon la revendication 1 ou 2, dans lequel la seconde couche diélectrique (44C) est soudée à la première couche diélectrique (44A) par des joints de soudure réalisés par soudage par ultrasons, soudage au laser, soudage par radiofréquence, ou thermoscellage.

4. Ensemble de panneau de plancher selon une quelconque revendication précédente, comprenant en outre une seconde couche centrale entre la couche d'impact et le dispositif de chauffage à coefficient de température positif.

5. Ensemble de panneau de plancher selon une quelconque revendication précédente, dans lequel la barre omnibus (52) comprend un matériau métallique choisi dans le groupe constitué de l'argent, du cuivre et de combinaisons de ceux-ci.

6. Ensemble de panneau de plancher selon la revendication 5, dans lequel la barre omnibus (52) est une encre métallique choisie dans le groupe constitué de l'encre argent et l'encre cuivre.

7. Ensemble de panneau de plancher selon une quelconque revendication précédente, dans lequel l'au moins une couche structurelle comprend une matrice polymère renforcée comprenant une matrice fibreuse structurelle imprégnée d'une résine structurelle.

8. Ensemble de panneau de plancher selon une quelconque revendication précédente, dans lequel l'élément de dispositif de chauffage à coefficient de température positif est une encre de carbone remplie d'additif.

9. Procédé de fabrication d'un dispositif de chauffage à coefficient de température positif pour un ensemble de panneau de plancher (30) comprenant :
la fourniture d'une première couche diélectrique (44A) ;
l'impression d'un élément de dispositif de chauffage à coefficient de température positif (44B) sur la première couche diélectrique (44A) ;
l'impression d'une barre omnibus (52) sur la première couche diélectrique (44A), de sorte que la barre omnibus (52) chevauche l'élément de dispositif de chauffage à coefficient de température positif ;
la superposition d'une seconde couche diélectrique (44C) sur l'élément de dispositif de chauffage à coefficient de température positif et la barre omnibus (52) de sorte que des parties du second dispositif de chauffage diélectrique sont en contact avec la première couche diélectrique ; et
le soudage de la seconde couche diélectrique (44C) à la première couche diélectrique (44A).

10. Procédé selon la revendication 9, dans lequel la première couche diélectrique (44A) et la seconde couche diélectrique (44C) sont des films plastiques soudables qui comprennent un thermoplastique choisi dans le groupe constitué du polyimide thermoplastique, du polyéther éther cétone, du polyétherimide, du sulfure de polyphénylène, du polyéthylène téréphtalate, de la polyphénylsulfone, de l'éthylène propylène fluoré et de combinaisons de ceux-ci et qui ont une épaisseur comprise entre 20 microns et 200 microns.

11. Procédé selon la revendication 9 ou 10, dans lequel la seconde couche diélectrique (44C) est soudée à la première couche diélectrique (44A) par des joints de soudure réalisés à partir d'un soudage par ultrasons, d'un soudage au laser, d'un soudage par radiofréquence ou d'un thermoscellage.

12. Procédé selon la revendication 9, 10 ou 11, dans lequel l'impression de l'élément de dispositif de chauffage à coefficient de température positif comprend l'impression d'une encre chargée en carbone rempli d'additif.

13. Procédé selon la revendication 9, 10, 11 ou 12, dans lequel l'impression de la barre omnibus (52) comprend l'impression d'une encre argent ou d'une encre cuivre.

14. Procédé selon la revendication 9, 10, 11, 12 ou 13, dans lequel le soudage de la seconde couche diélectrique (44C) comprend un soudage par ultrasons, un soudage au laser, un soudage par radiofréquence ou un thermoscellage.
